# EUROPÄISCHE PATENTANMELDUNG

(11) **EP 4 209 698 A1**
(43) Veröffentlichungstag der Anmeldung: **12.07.2023**
(21) Anmeldenummer: 22215041.9
(22) Anmeldetag: 20.12.2022
(51) Int. Cl.: F16L 23/18

(54) **FLANSCHDICHTUNG UND DICHTUNGSANORDNUNG, DIE EINE SOLCHE FLANSCHDICHTUNG UMFASST**

(30) Priorität: 11.01.2022 DE 102022100474
(71) Anmelder: Carl Freudenberg KG, 69469 Weinheim (DE)
(72) Erfinder: Lauer, Frank, 69231 Rauenberg (DE); Kreiselmaier, Rainer, 67071 Ludwigshafen (DE); Kramer, Thomas, 64668 Zotzenbach (DE); KOHL, Christian, 69469 Weinheim (DE); Weißenberger, Tobias, 64283 Darmstadt (DE); Frank, Julia, 79576 Weil am Rhein (DE)

(57) **Zusammenfassung**

Flanschdichtung, umfassend ein Dichtelement (1) aus einem gummielastischen Werkstoff und ein Stützelement (2) aus einem zähharten Werkstoff, wobei das Dichtelement (1) und das Stützelement (2) miteinander verbunden sind. Das Stützelement (2) ist als kombiniertes Zentrierungs- und Verpressungsbegrenzungselement (3) ausgebildet.

## Beschreibung

### Technisches Gebiet

Die Erfindung betrifft eine Flanschdichtung und eine Dichtungsanordnung, die eine solche Flanschdichtung umfasst.

Die Flanschdichtung umfasst ein Dichtelement aus einem gummielastischen Werkstoff und ein Stützelement aus einem zähharten Werkstoff, wobei das Dichtelement und das Stützelement miteinander verbunden sind.

### Stand der Technik

Eine solche Flanschdichtung und eine solche Dichtungsanordnung sind jeweils aus der DIN 32676 und aus der DE 10 2016 005 385 A1 bekannt.

Die Dichtungsanordnung umfasst zwei koaxial und axial benachbart zueinander angeordnete Flansche, die durch eine in axialer Richtung geklemmte Flanschdichtung dichtend miteinander verbunden sind.

Die Flansche können zu miteinander zu verbindenden Rohren gehören.

Die Flansche und die Flanschdichtung bilden gemeinsam eine rohrförmige Leitung, die von einem abzudichtenden Medium durchströmbar ist. Die Flansche weisen auf ihren einander zugewandten Seiten jeweils eine Nut auf. Die Nuten dienen zur Positionierung der Flanschdichtung axial zwischen den Flanschen.

Die vorbekannte Flanschdichtung aus der DE 10 2016 005 385 A1 ist als Verbundteil ausgebildet, wobei das Stützelement ausschließlich als Verpressungsbegrenzungselement ausgebildet und mit dem Dichtelement vulkanisiert ist.

Flanschdichtungen, die bezogen auf die abzudichtenden Flansche insbesondere in radialer Richtung in ihrer Position nicht exakt ausgerichtet sind, erfüllen nicht die Hygiene-Anforderungen, die in den Designrichtlinien der EHEDG (European Hygienic Engineering und Design Group) vorgegeben sind.

### Darstellung der Erfindung

Der Erfindung liegt die Aufgabe zugrunde, eine Flanschdichtung für eine Clampverbindung, beispielsweise nach DIN 32676, und eine Dichtungsanordnung mit der Flanschdichtung zu zeigen, die einfach und kostengünstig herstellbar sind und alle Designrichtlinien der EHEDG erfüllen.

Diese Aufgabe wird erfindungsgemäß durch eine Flanschdichtung gemäß Anspruch 1 und eine Dichtungsanordnung gemäß Anspruch 8 gelöst. Auf vorteilhafte Ausgestaltungen der Flanschdichtung und der Dichtungsanordnung nehmen die auf Anspruch 1 und Anspruch 8 direkt oder indirekt rückbezogenen Ansprüche Bezug.

Zur Lösung der Aufgabe ist es vorgesehen, dass das Stützelement als kombiniertes Zentrierungs- und Verpressungsbegrenzungselement ausgebildet ist.

Hierbei ist von Vorteil, dass die Flanschdichtung durch das Stützelement in der Dichtungsanordnung zwischen den Flanschen in ihrer vorbestimmten Position stets lagerichtig exakt angeordnet ist. Insbesondere die exakte Zentrierung der Flanschdichtung in radialer Richtung zwischen den Flanschen ist von Vorteil, um die Hygieneanforderungen der Designrichtlinien der EHEDG zu erfüllen. Durch das Zentrierungselement des Stützelements wird bewirkt, dass das Dichtelement während der bestimmungsgemäßen Verwendung der Flanschdichtung und der Dichtungsanordnung, die die Flanschdichtung umfasst, in radialer Richtung nicht in den leitungsförmigen Hohlraum hineinragt, der von den Flanschen außenumfangsseitig umschlossen ist und in den axialen Spalt zwischen den Flanschen auch nicht zurückspringt. Die Abdichtung der Flanschdichtung axial zwischen den Flanschen erfolgt produktbündig.

Durch die produktbündig exakte Positionierung der Flanschdichtung axial zwischen den Flanschen werden Spalte und Totzonen, die eine gründliche Reinigung der Dichtstelle vor Ort, eine sogenannte CIP (cleaning in place)-Reinigung, verhindern würden, vermieden.

Das Verpressungsbegrenzungselement des Stützelements bewirkt eine Begrenzung von auf die Flanschdichtung wirksamen Klemmkräften. Die Flanschdichtung wird während ihrer Montage in axialer Richtung so lange und zunehmend geklemmt, bis das Verpressungsbegrenzungselement die in axialer Richtung benachbarten abzudichtenden Flansche unmittelbar anliegend berührt. Hauptzweck des Verpressungsbegrenzungselements ist die Einstellung einer exakten produktbündigen radialen Position des Dichtelements. Während der Montage der Flanschdichtung weicht der gummielastische Werkstoff aus, was durch die Ausgestaltung des Verpressungsbegrenzungselements einstellbar ist. Außerdem wird eine zu geringe Verpressung, die zu einer Leckage führen könnte, durch ein haptisches Feedback vermieden.

Durch die Begrenzung der Klemmkräfte wird außerdem der gummielastische Werkstoff des Dichtelements keinen unerwünscht hohen mechanischen Belastungen ausgesetzt. Dadurch wird eine lange Gebrauchsdauer der Flanschdichtung bei gleichbleibend guten Gebrauchseigenschaften erreicht.

In dem Stützelement sind folglich zwei Funktionen vereint:
Wie zuvor ausgeführt, wird durch das kombinierte Zentrierungs- und Verpressungsbegrenzungselement einerseits eine stets lagerichtige, exakte Positionierung der Flanschdichtung zwischen den Flanschen in der Dichtungsanordnung sichergestellt und andererseits eine dauerhaft gute Abdichtung gewährleistet, bei Erfüllung aller Designrichtlinien der EHEDG.

Bevorzugt sind das Dichtelement und das Stützelement als Clampdichtung nach DIN 32676 ausgebildet. Das Stützelement zentriert während der bestimmungsgemäßen Verwendung der Clampdichtung nicht nur die Clampdichtung relativ zu den axial angrenzenden Flanschen der entsprechenden Dichtungsanordnung, sondern auch die Flansche relativ zueinander.

Gemäß einer vorteilhaften Ausgestaltung kann es vorgesehen sein, dass das Dichtelement und das Stützelement ungehaftet miteinander verbunden sind. Hierbei ist von Vorteil, dass die Flanschdichtung einfach und kostengünstig herstellbar ist und im Anschluss an ihre bestimmungsgemäße Verwendung besonders einfach und sortenrein recycelt werden kann. Das Stützelement kann wiederverwendet werden, was in wirtschaftlicher Hinsicht und im Hinblick auf eine gute Umweltverträglichkeit von hervorzuhebendem Vorteil ist.

Eine ungehaftete Verbindung kann dadurch erreicht werden, dass das Dichtelement und das Stützelement kraft- und/oder formschlüssig miteinander verbunden sind.

Eine kraft- und/oder formschlüssige Verbindung kann zum Beispiel durch eine Knüpfverbindung hergestellt werden. Dichtelement und Stützelement sind durch die Knüpfverbindung einfach zu montieren und dann kraft- und/oder formschlüssig miteinander verbunden.

Generell besteht auch die Möglichkeit, dass das Dichtelement und das Stützelement gehaftet, also zum Beispiel durch Vulkanisation stoffschlüssig, miteinander verbunden sind.

Im Hinblick auf eine kostengünstige Herstellbarkeit und eine gute Umweltverträglichkeit ist eine solche Ausgestaltung weniger vorteilhaft, weil eine stoffschlüssige Verbindung, im Vergleich zu einer kraft- und/oder formschlüssigen Verbindung, teurer herzustellen ist und weil das Recycling dadurch erschwert und das Stützelement in der Regel nicht einfach wiederverwendbar ist.

Das Dichtelement und das Stützelement können jeweils ringförmig ausgebildet sein, insbesondere kreisringförmig.

Das kombinierte Zentrierungs- und Verpressungsbegrenzungselement kann zwei in radialer Richtung wirksame Zentrieranschläge und zwei in axialer Richtung benachbart zueinander angeordnete Verpressungsbegrenzungsanschläge aufweisen. Durch die beiden Zentrieranschläge und die Verpressungsbegrenzungsanschläge erfolgt eine exakte Einstellung der Flanschdichtung radial und axial zwischen den Flanschen. Die Zentrieranschläge bewirken außerdem eine exakte radiale Ausrichtung der axial angrenzenden Flansche relativ zueinander.

Außerdem betrifft die Erfindung eine Dichtungsanordnung, die eine Flanschdichtung, wie zuvor beschrieben, umfasst.

Die Dichtungsanordnung umfasst eine Flanschdichtung und zwei Flansche, die axial mit Abstand zueinander benachbart angeordnet sind, wobei in dem durch den Abstand gebildeten Spalt die Flanschdichtung dichtend angeordnet ist und wobei die Flansche das kombinierte Zentrierungs- und Verpressungsbegrenzungselement unmittelbar anliegend berühren. Durch das kombinierte Zentrierungs- und Verpressungsbegrenzungselement ist die Flanschdichtung den in axialer Richtung angrenzenden Flanschen in axialer und radialer Richtung stets in lagerichtiger, exakter Position zugeordnet. Zur Erfüllung der Hygiene-Vorschriften der Designrichtlinien der EHEDG ist das erforderlich.

Wie in der eingangs genannten Norm vorgeschrieben, weisen die Flansche auf ihren axial einander zugewandten Seiten jeweils eine ringförmig ausgebildete nutförmige Ausnehmung aufweisen, in denen die Flanschdichtung angeordnet ist, wobei das kombinierte Zentrierungs- und Verpressungsbegrenzungselement die die Ausnehmungen begrenzenden Wandungen der Flansche unmittelbar anliegend berührt. Die Zentrierung der Flanschdichtung bezogen auf die Flansche erfolgt durch einen Formschluss, weiter bevorzugt selbsttätig während der Montage. Während der bestimmungsgemäßen Verwendung der Dichtungsanordnung wird die Flanschdichtung dadurch stets zuverlässig in ihrer exakten Position produktbündig zwischen den Flanschen gehalten.

Nach einer ersten Ausgestaltung kann es vorgesehen sein, dass das kombinierte Zentrierungs- und Verpressungsbegrenzungselement, im Schnitt betrachtet, im Wesentlichen L-förmig ausgebildet ist. Durch die L-Form wird das kombinierte Zentrierungs- und Verpressungsbegrenzungselement in den Ausnehmungen in radialer und axialer Richtung verspannt Während der Montage der Dichtungsanordnung wird die Flanschdichtung selbsttätig und passend zwischen den Flanschen eingestellt.

Dazu können die nutförmigen Ausnehmungen, im Schnitt betrachtet, im Wesentlichen halbrund ausgeführt sein.

Nach einer anderen Ausgestaltung kann es vorgesehen sein, dass das kombinierte Zentrierungs- und Verpressungsbegrenzungselement, im Schnitt betrachtet, im Wesentlichen T-förmig ausgebildet ist, einen Radialschenkel und einen Axialschenkel aufweist und dass der Radialschenkel axial beiderseits von den Flanschen unmittelbar anliegend berührt ist und das Verpressungsbegrenzungselement bildet und dass der Axialschenkel die beiden Flansche außenumfangsseitig anliegend umschließt und das Zentrierelement bildet. Hierbei ist von Vorteil, dass die Zentrierung der Flansche und der Dichtung besonders genau ist.

### Kurzbeschreibung der Zeichnung

Drei Ausführungsbeispiele einer erfindungsgemäßen Flanschdichtung und einer erfindungsgemäßen Dichtungsanordnung, die die Flanschdichtung umfasst, sind in den Figuren 1 bis 8 dargestellt und werden nachfolgend näher beschrieben:
- In den Figuren 1 bis 4: ist ein erstes Ausführungsbeispiel gezeigt, bei dem die Zentrierung und die Verpressungsbegrenzung in den nutförmigen Ausnehmungen der Flansche der Dichtungsanordnung erfolgt,
- In den Figuren 5 und 6: ist ein zweites Ausführungsbeispiel gezeigt, bei dem die Zentrierung außenumfangsseitig der Flansche der Dichtungsanordnung erfolgt,
- In den Figuren 7 und 8: ist ein drittes Ausführungsbeispiel gezeigt, ähnlich dem Ausführungsbeispiel aus den Figuren 1 bis 4, jedoch für kleinere Nennweiten.

### Ausführung der Erfindung

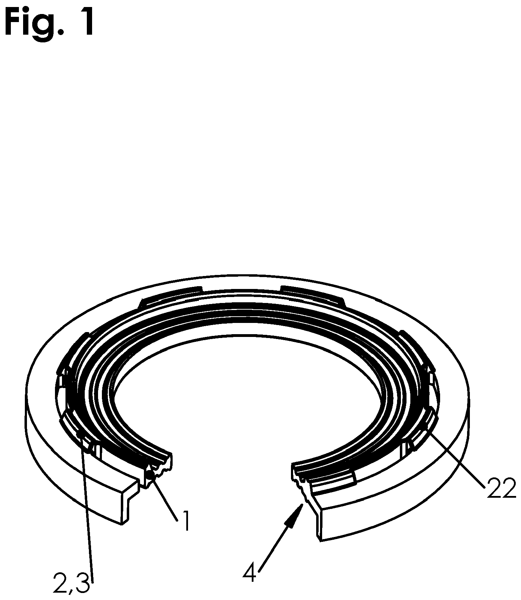

In den Figuren 1 bis 8 sind drei Ausführungsbeispiele einer Flanschdichtung gezeigt, die jeweils in einer Dichtungsanordnung zur Anwendung gelangen. Die Flanschdichtung ist als Clampdichtung für eine Clampverbindung gemäß DIN 32676 ausgebildet.

Die Flanschdichtungen umfassen jeweils ein Dichtelement 1, das aus einem gummielastischen Werkstoff besteht. Das Stützelement 2 besteht demgegenüber aus einem zähharten Werkstoff, bevorzugt aus einem metallischen Werkstoff, weiter bevorzugt aus Edelstahl.

Das Dichtelement 1 und das Stützelement 2 sind in den gezeigten Ausführungsbeispielen ungehaftet miteinander verbunden. Die ungehaftete Verbindung erfolgt jeweils durch einen Formschluss in Form einer mechanischen Verkrallung, insbesondere dadurch, dass das Dichtelement 1 und das Stützelement 2 durch eine Knüpfverbindung 4 miteinander verbunden sind.

In allen Ausführungsbeispielen sind das Dichtelement 1 und das Stützelement 2 jeweils kreisringförmig ausgebildet.

Um eine gute Positionierung der Flanschdichtung zwischen den Flanschen 11, 12 innerhalb der Dichtungsanordnung in radialer 5 und axialer Richtung 8 zu erreichen ist das Stützelement 2 als kombiniertes Zentrierungs- und Verpressungsbegrenzungselement 3 ausgebildet.

Die Dichtungsanordnungen umfassen jeweils eine Flanschdichtung und zwei Flansche 11, 12, die axial mit Abstand benachbart zueinander angeordnet sind. In dem durch den Abstand gebildeten Spalt 21 ist die Flanschdichtung dichtend angeordnet. Bezogen auf den durchströmbaren Querschnitt der Flansche 11, 12 ist die Flanschdichtung produktbündig angeordnet. Diese produktbündige Anordnung wird dadurch eingestellt, dass die Flansche 11, 12 die Verpressungsbegrenzungsanschläge 9, 10 im Anschluss an die Montage anliegend berühren. Der Werkstoff des Dichtelements 1 dichtet dann den axialen Spalt 21 in axialer Richtung 8 vollständig ab.

Das Stützelement 2, das als kombiniertes Zentrierungs- und Verpressungsbegrenzungselement 3 ausgebildet ist, berührt die Flansche 11, 12 jeweils unmittelbar anliegend und dichtend.

In Figur 1 ist ein erstes Ausführungsbeispiel einer Flanschdichtung im herstellungsbedingten Zustand gezeigt. Zum besseren Verständnis ist in der Figur ein Segment aus der Flanschdichtung entfernt Das Stützelement 2 ist als Edelstahl-Ring ausgebildet und weist in axialer Richtung 8 einerseits sich in axialer Richtung 8 erstreckende Vorsprünge 22 auf.

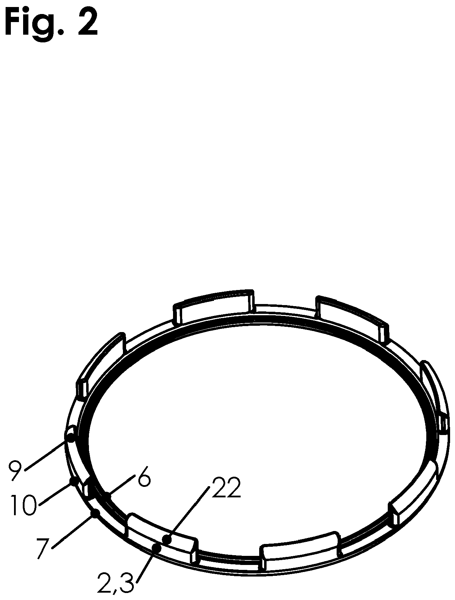

In Figur 2 ist das Stützelement 2, das als kombiniertes Zentrierungs- und Verpressungsbegrenzungselement 3 ausgebildet ist, als Einzelteil dargestellt.

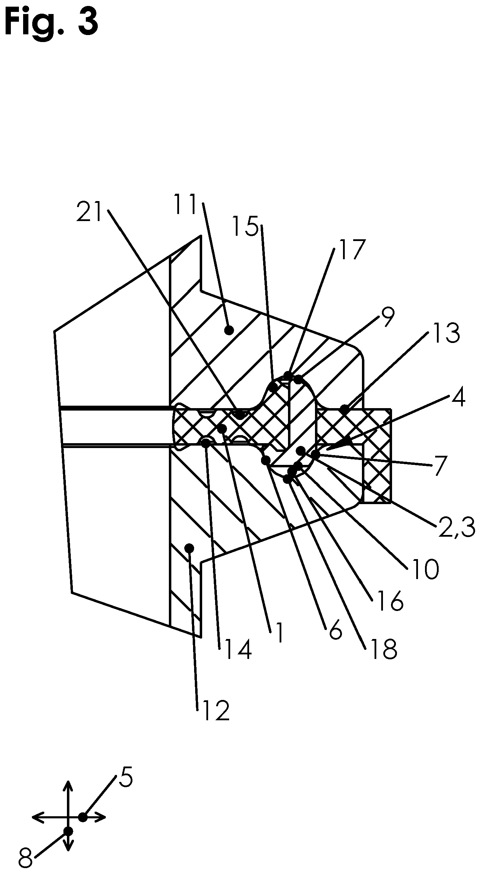

In Figur 3 ist eine Dichtungsanordnung gezeigt, in der die Flanschdichtung aus Figur 1 zur Anwendung gelangt.

Es ist zu erkennen, dass das kombinierte Zentrierungs- und Verpressungsbegrenzungselement 3 Ausnehmungen im Dichtelement 1 mit seinen axialen Vorsprüngen 22 durchdringt. Das Dichtelement 1 und das Stützelement 2 sind durch die Knüpfverbindung 4 ungehaftet miteinander verbunden.

Das kombinierte Zentrierungs- und Verpressungsbegrenzungselement 3 wird innerhalb der nutförmigen Ausnehmungen 15, 16 in axialer und in radialer Richtung verspannt. Die Ausnehmungen 15, 16 sind jeweils in den axial einander zugewandten Seiten 13, 14 der Flansche 11, 12 angeordnet. Sowohl die Zentrierung als auch die Verpressungsbegrenzung ergeben sich selbsttätig, wenn die Flansche 11, 12 bei Montage der Flanschdichtung in axialer Richtung 8 gegeneinander verspannt werden.

Die Ausnehmungen 15, 16 sind durch die Wandungen 17, 18 begrenzt, an denen sich das kombinierte Zentrierungs- und Verpressungsbegrenzungselement 3 abstützt.

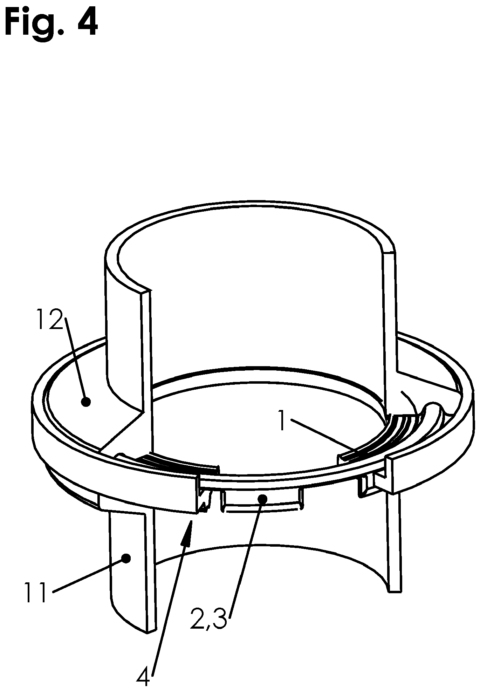

In Figur 4 ist die Dichtungsanordnung aus Figur 3 in einer perspektivischen Ansicht dargestellt.

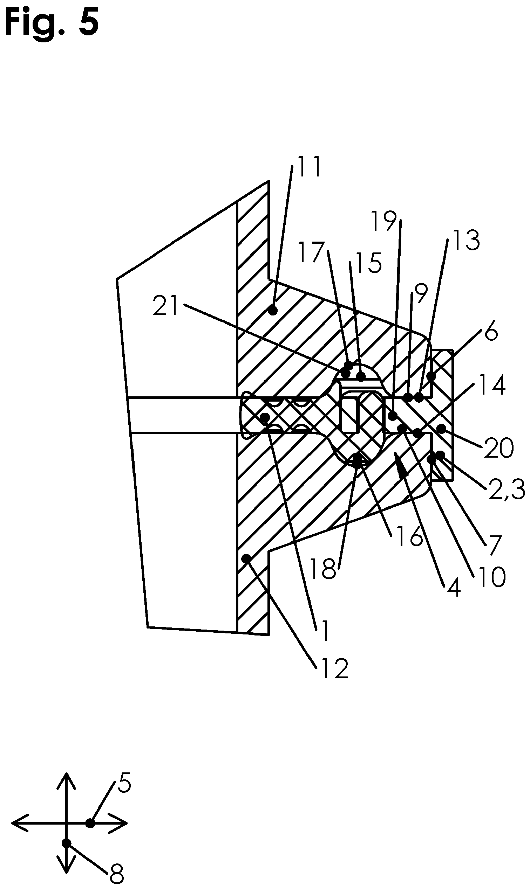

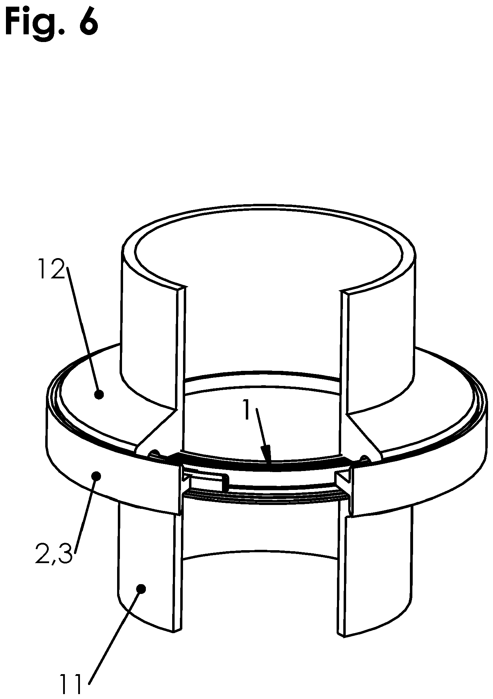

In den Figuren 5 und 6 ist ein zweites Ausführungsbeispiel einer Flanschdichtung und einer Dichtungsanordnung, die die Flanschdichtung umfasst, gezeigt. Im Gegensatz zum ersten Ausführungsbeispiel erfolgt in diesem Ausführungsbeispiel die Zentrierung der Flanschdichtung zwischen den Flanschen 11, 12 über den Außenumfang der Flansche 11, 12.

Das kombinierte Zentrierungs- und Verpressungsbegrenzungselement 3 ist, wie hier im Schnitt dargestellt, im Wesentlichen T-förmig ausgebildet und weist einen Radialschenkel 19 und einen Axialschenkel 20 auf. Der Radialschenkel 19 wird axial beiderseits von den Flanschen 11, 12 unmittelbar anliegend berührt und bildet so das Verpressungsbegrenzungselement. Der Axialschenkel 20 umschließt die beiden Flansche 11, 12 außenumfangsseitig anliegend und bildet dadurch das Zentrierungselement.

Auch hier sind das Dichtelement 1 und das Stützelement 2 durch die Knüpfverbindung 4 ungehaftet miteinander verbunden.

In Figur 6 ist die Dichtungsanordnung aus Figur 5 in einer perspektivischen Darstellung gezeigt.

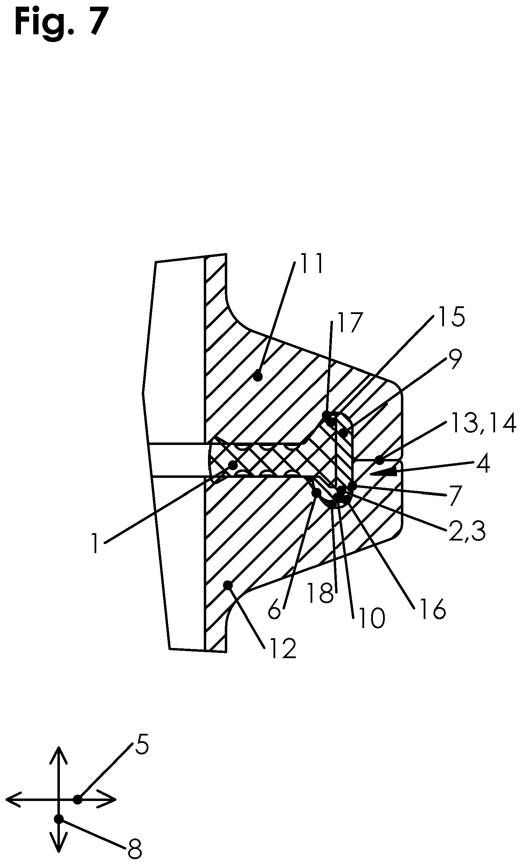

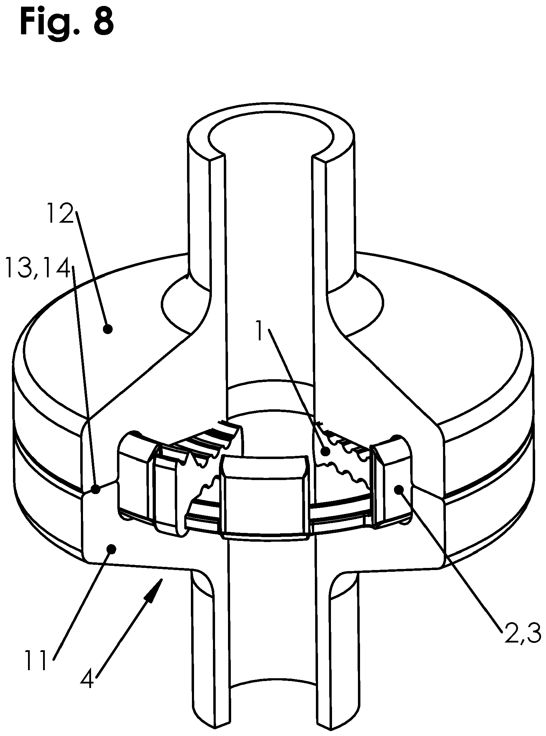

In den Figuren 7 und 8 ist ein drittes Ausführungsbeispiel gezeigt, ähnlich dem ersten Ausführungsbeispiel aus den Figuren 1 bis 4.

Dieses Ausführungsbeispiel gelangt zusammen mit kleineren Nennweiten zur Anwendung. Die Dichtungsanordnung baut in radialer Richtung 5 besonders kompakt.

Das auch hier als kombiniertes Zentrierungs- und Verpressungsbegrenzungselement 3 ausgebildete Stützelement 2 umgreift das Dichtelement 1 außenumfangsseitig. Das klammerförmige Spannelement 2 wird bei Verpressung der Flansche 11, 12 in axialer Richtung 8, wie zuvor im ersten Ausführungsbeispiel bereits beschrieben, selbsttätig in radialer und axialer Richtung eingestellt und bewirkt außerdem eine Begrenzung der Verpressung des Dichtelements 1 in axialer Richtung 8 und damit eine produktbündige Zuordnung zu den Flanschen 11, 12, die konform zu den Designrichtlinien der EHEDG ist.

In Figur 8 ist das dritte Ausführungsbeispiel aus Figur 7 in einer perspektivischen Darstellung teilgeschnitten gezeigt.

## Patentansprüche

1. Flanschdichtung, umfassend ein Dichtelement (1) aus einem gummielastischen Werkstoff und ein Stützelement (2) aus einem zähharten Werkstoff, wobei das Dichtelement (1) und das Stützelement (2) miteinander verbunden sind, **dadurch gekennzeichnet, dass** das Stützelement (2) als kombiniertes Zentrierungs- und Verpressungsbegrenzungselement (3) ausgebildet ist.

2. Flanschdichtung nach Anspruch 1, **dadurch gekennzeichnet, dass** das Dichtelement (1) und das Stützelement (2) als Clampdichtung ausgebildet sind.

3. Flanschdichtung nach einem der Ansprüche 1 oder 2, **dadurch gekennzeichnet, dass** das Dichtelement (1) und das Stützelement (2) ungehaftet miteinander verbunden sind.

4. Flanschdichtung nach einem der Ansprüche 1 bis 3, **dadurch gekennzeichnet, dass** das Dichtelement (1) und das Stützelement (2) kraft- und/oder formschlüssig miteinander verbunden sind.

5. Flanschdichtung nach einem der Ansprüche 1 bis 4, **dadurch gekennzeichnet, dass** das Dichtelement (1) und das Stützelement (2) durch eine Knüpfverbindung (4) miteinander verbunden sind.

6. Flanschdichtung nach einem der Ansprüche 1 bis 5, **dadurch gekennzeichnet, dass** das Dichtelement (1) und das Stützelement (2) jeweils ringförmig ausgebildet sind.

7. Flanschdichtung nach einem der Ansprüche 1 bis 6, **dadurch gekennzeichnet, dass** das kombinierte Zentrierungs- und Verpressungsbegrenzungselement (3) zwei in radialer Richtung (5) wirksame Zentrieranschläge (6, 7) und zwei in axialer Richtung (8) benachbart zueinander angeordnete Verpressungsbegrenzungsanschläge (9, 10) aufweist.

8. Dichtungsanordnung, umfassend eine Flanschdichtung nach einem der Ansprüche 1 bis 7 und zwei Flansche (11, 12), die axial mit Abstand zueinander benachbart angeordnet sind, wobei in dem durch den Abstand gebildeten Spalt (13) die Flanschdichtung dichtend angeordnet ist und wobei die Flansche (11, 12) das kombinierte Zentrierungs- und Verpressungsbegrenzungselement (3) unmittelbar anliegend berühren.

9. Dichtungsanordnung nach Anspruch 8, **dadurch gekennzeichnet, dass** die Flansche (11, 12) auf ihren axial einander zugewandten Seiten (13, 14) jeweils eine ringförmig ausgebildete nutförmige Ausnehmung (15, 16) aufweisen, in denen die Flanschdichtung angeordnet ist und dass das kombinierte Zentrierungs- und Verpressungsbegrenzungselement (3) die Ausnehmungen (15, 16) begrenzenden Wandungen (17, 18) der Flansche (11, 12) unmittelbar anliegend berührt.

10. Dichtungsanordnung nach einem der Ansprüche 8 oder 9, **dadurch gekennzeichnet, dass** das kombinierte Zentrierungs- und Verpressungsbegrenzungselement (3), im Schnitt betrachtet, im Wesentlichen L-förmig ausgebildet ist.

11. Dichtungsanordnung nach einem der Ansprüche 8 oder 9, **dadurch gekennzeichnet, dass** das kombinierte Zentrierungs- und Verpressungsbegrenzungselement (3), im Schnitt betrachtet, im Wesentlichen T-förmig ausgebildet ist, einen Radialschenkel (19) und einen Axialschenkel (20) aufweist und dass der Radialschenkel (19) axial beiderseits von den Flanschen (11, 12) unmittelbar anliegend berührt ist und das Verpressungsbegrenzungselement bildet und dass der Axialschenkel (20) die beiden Flansche (11, 12) außenumfangsseitig anliegend umschließt und das Zentrierelement bildet.
